# EUROPEAN PATENT APPLICATION

(11) **EP 4 840 696 A1**
(43) Date of publication of application: **18.11.2026**
(21) Application number: 25219067.3
(22) Date of filing: 27.11.2025
(51) Int. Cl.: B60N 2/90, B60N 2/70, H04R 3/12, H04R 5/02

(54) **METHOD FOR OPERATING MUSIC SEAT AND VIBRATING SEAT USING THE SAME**

(30) Priority: 16.05.2025 KR 20250063778
(71) Applicant: Hyundai Mobis Co., Ltd., Gangnam-gu Seoul 06141 (KR)
(72) Inventor: LIM, Hyung Sub, 16891 Yongin-si, Gyeonggi-do (KR)
(74) Representative: Jung, Minkyu

(57) **Abstract**

A vibrating seat, a method thereof, and a system thereof are provided. The vibrating seat includes: a sound source acquirer (2100) to receive a sound source output from a vehicle; a sound source characteristic analyzer (2200) to analyze frequency band data of the received sound source; a music seat vibration data generator (2300) to generate vibration data by mapping each of a plurality of vibrators disposed in the vibrating seat to respective ones of frequency bands of the sound source; a music seat designer (2400) to generate music seat design information based on an embedding depth of each of the plurality of vibrators disposed in the vibrating seat and a configuration of a plurality of media disposed between a surface of the vibrating seat and each vibrator; and a music seat vibration data outputter (2500) to output the music seat vibration data based on the music seat design information.

## Description

### CROSS-REFERENCE TO RELATED APPLICATION(S)

This application claims the benefit of Korean Patent Application No. 10-2025-0063778, filed on May 16, 2025, which is hereby incorporated by reference as if fully set forth herein.

### BACKGROUND

### 1. Field of the Disclosure

The present embodiments relate to a vibrating seat, and more particularly, to a vehicle to which a music seat operating method is applied.

### 2. Description of the Related Art

It is known that there is a technology for forcibly vibrating a vibrating seat of a vehicle when necessary for the purpose of alerting a passenger in the vehicle or preventing drowsy driving.

To generate the desired vibration on the vibrating seat of the vehicle as described above, a separate actuator has conventionally been used for the vibration generation of the vibrating seat.

That is, an electro-dynamic actuator or a pneumatic actuator has been mounted inside a vibrating seat cushion or on a vibrating seat frame to generate the desired vibration on the vehicle vibrating seat depending on a situation.

Recently, there is an increasing need for a more improved music playback environment during operation of the vehicle. The vibrating seat is an apparatus capable of increasing satisfaction of the vehicle passenger during sound source play by mounting a vibration generating means in the vibrating seat of the vehicle and generating the vibration corresponding to the currently playing sound source.

To this end, there is a need to develop a vibration control means for the vibrating seat that may generate a sense of spatiality suitable for a music characteristic during operation of the music seat by diversifying an arrangement of vibrators in the vibrating seat and a configuration of surrounding media.

### SUMMARY

To solve the above-described problems, an embodiment of the present disclosure is intended to provide a vibrating seat that adjusts vibrators corresponding to a sound source, an arrangement of the vibrators, and a configuration of surrounding media.

Problems to be solved by the present disclosure are not limited to the problems mentioned above, and other problems not mentioned will be clearly understood by those skilled in the art to which the present disclosure pertains from the following description.

In a general aspect, a vibrating seat includes: a sound source acquirer configured to receive a sound source output from a vehicle; a sound source characteristic analyzer configured to analyze frequency band data of the received sound source; a music seat vibration data generator configured to generate vibration data by mapping each of a plurality of vibrators disposed in the vibrating seat to respective ones of frequency bands of the sound source; a music seat designer configured to generate music seat design information based on an embedding depth of each of the plurality of vibrators disposed in the vibrating seat and a configuration of a plurality of media disposed between a surface of the vibrating seat and each vibrator; and a music seat vibration data outputter configured to output the music seat vibration data based on the music seat design information.

The plurality of vibrators may include: a high-frequency vibrator configured to produce high-frequency vibration; a low-frequency vibrator configured to produce low-frequency vibration; and a mid-frequency vibrator configured to produce vibration in a frequency range between high and low frequencies.

The plurality of media may include: a high-attenuation medium having a first attenuation coefficient; a medium-attenuation medium having a second attenuation coefficient; and a low-attenuation medium having a third attenuation coefficient, wherein the first attenuation coefficient is greater than the second attenuation coefficient, and the second attenuation coefficient is greater than the third attenuation coefficient.

The music seat vibration data generator may be configured to: map each of the plurality of vibrators to respective ones of analyzed high-frequency band, mid-frequency band, and low-frequency band of the sound source; and generate the vibration data including vibration gains of the mapped vibrators.

The music seat designer may be further configured to arrange the plurality of vibrators having different embedding depths.

The music seat designer may be further configured to arrange the plurality of media having different degrees of attenuation of vibration generated by the plurality of vibrators.

The music seat designer may be further configured to: place the high-frequency vibrator at a first embedding depth spaced apart from the surface of the vibrating seat; and place the high-attenuation medium between the high-frequency vibrator and the vibrating seat.

The music seat designer may be further configured to: place the mid-frequency vibrator at a second embedding depth farther from the surface of the vibrating seat than the first embedding depth; and place the medium-attenuation medium between the mid-frequency vibrator and the vibrating seat.

The music seat designer may be further configured to: place the low-frequency vibrator at a third embedding depth farther from the surface of the vibrating seat than the second embedding depth; and place the low-attenuation medium between the low-frequency vibrator and the vibrating seat.

In another general aspect, a method for operating a music seat, includes: receiving a sound source output from a vehicle; analyzing frequency band data of the received sound source; generating vibration data by mapping each of a plurality of vibrators to respective ones of frequency bands of the sound source; generating music seat design information based on an embedding depth of each vibrator disposed in the vibrating seat and a configuration of a plurality of media disposed between a surface of the vibrating seat and each vibrator; and outputting the music seat vibration data based on the music seat design information.

In yet another general aspect, a vibrating seat system for a vehicle, includes: a sound source acquirer configured to receive a sound source output from the vehicle; a sound source characteristic analyzer configured to analyze frequency band data of the received sound source; a music seat vibration data generator configured to generate vibration data by mapping each of a plurality of vibrators disposed in the vibrating seat to respective ones of frequency bands of the sound source; a music seat designer configured to generate music seat design information based on an embedding depth of each of the plurality of vibrators disposed in the vibrating seat and a configuration of a plurality of media disposed between a surface of the vibrating seat and each vibrator; a music seat vibration data outputter configured to output the music seat vibration data based on the music seat design information; a camera senor; an output device; and a controller configured to monitor an occupant based on an image captured by the camera sensor and output a guidance to the occupant through the output device.

The controller may be further configured to turn off the music seat vibration data outputter based on the guidance.

The plurality of vibrators may include: a high-frequency vibrator configured to produce high-frequency vibration; a low-frequency vibrator configured to produce low-frequency vibration; and a mid-frequency vibrator configured to produce vibration in a frequency range between high and low frequencies.

The plurality of media may include: a high-attenuation medium having a first attenuation coefficient; a medium-attenuation medium having a second attenuation coefficient; and a low-attenuation medium having a third attenuation coefficient, wherein the first attenuation coefficient is greater than the second attenuation coefficient, and the second attenuation coefficient is greater than the third attenuation coefficient.

The music seat vibration data generator may be configured to: map each of the plurality of vibrators to respective ones of analyzed high-frequency band, mid-frequency band, and low-frequency band of the sound source; and generate the vibration data including vibration gains of the mapped vibrators.

According to an embodiment, the sense of spatiality suitable for the music characteristics may be improved by analyzing the sound source transmitted in the vehicle and the configuration of the vibrating seat.

Effects obtainable in the present disclosure are not limited to the effects mentioned above, and other effects not mentioned may be clearly understood by those skilled in the art to which the present disclosure pertains from the following description.

### BRIEF DESCRIPTION OF THE DRAWINGS

FIG. 1 is an overall block diagram of an autonomous driving control system to which an autonomous driving apparatus according to any one of embodiments of the present disclosure is applicable.
FIG. 2 is a diagram illustrating an example in which an autonomous driving apparatus according to any one of embodiments of the present disclosure is applied to a vehicle.
FIG. 3 is a block diagram for illustrating a vibrating seat according to embodiments of the present disclosure.
FIGS. 4 and 5 are diagrams for illustrating vibrator installation examples of a vibrating seat according to embodiments of the present disclosure.
FIG. 6 is a diagram for illustrating a configuration of mapping vibrators corresponding to embedding depths of the vibrators according to an embodiment of the present disclosure.
FIG. 7 is a diagram for illustrating a configuration of mapping vibrators by arranging media having different characteristics according to an embodiment of the present disclosure.
FIGS. 8 and 9 are flowcharts for illustrating a method for operating a music seat according to embodiments of the present disclosure.

### DETAILED DESCRIPTION

Hereinafter, with reference to the accompanying drawings, embodiments of the present disclosure will be described in detail so that those skilled in the art can easily practice the present disclosure. However, the present disclosure may be implemented in various different forms and is not limited to the embodiments described herein. In addition, in the drawings, in order to clearly explain the present disclosure, parts that are not related to the description will be omitted, and the same or similar parts are denoted by the same reference numerals throughout the description.

Throughout the description, when a part is referred to as "including" an element, it may not mean that the part excludes other elements, but may mean that the part includes other elements, unless stated otherwise.

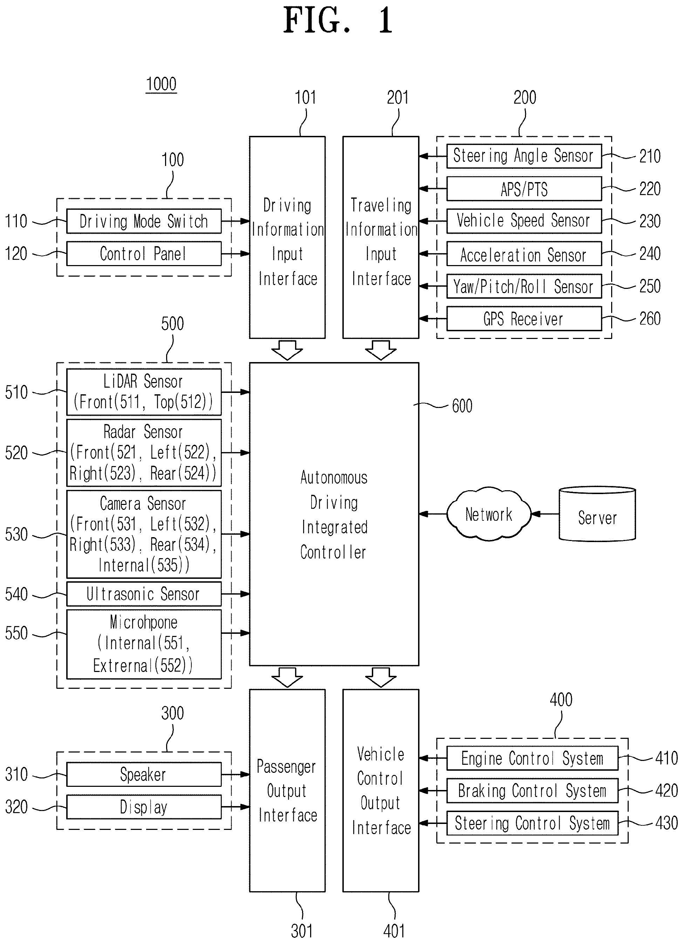

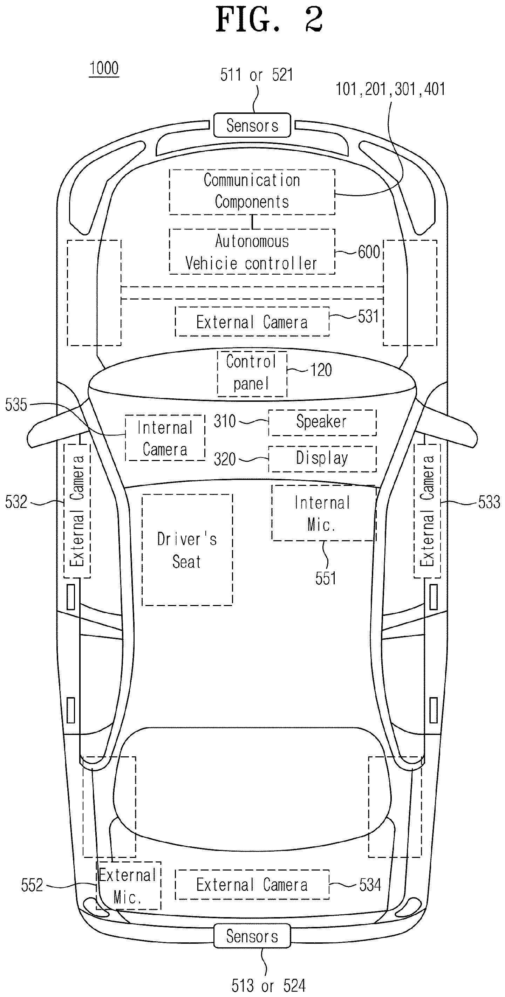

FIG. 1 is an overall block diagram of an autonomous driving control system to which an autonomous driving apparatus according to any one of embodiments of the present disclosure is applicable. FIG. 2 is a diagram illustrating an example in which an autonomous driving apparatus according to any one of embodiments of the present disclosure is applied to a vehicle.

First, a structure and function of an autonomous driving control system (e.g., an autonomous driving vehicle) to which an autonomous driving apparatus according to the present embodiments is applicable will be described with reference to FIGS. 1 and 2.

As illustrated in FIG. 1, an autonomous driving vehicle 1000 may be implemented based on an autonomous driving integrated controller 600 that transmits and receives data necessary for autonomous driving control of a vehicle through a driving information input interface 101, a traveling information input interface 201, an occupant output interface 301, and a vehicle control output interface 401. However, the autonomous driving integrated controller 600 may also be referred to herein as a controller, a processor, or, simply, a controller.

The autonomous driving integrated controller 600 may obtain, through the driving information input interface 101, driving information based on manipulation of an occupant for a user input unit 100 in an autonomous driving mode or manual driving mode of a vehicle. As illustrated in FIG. 1, the user input unit 100 may include a driving mode switch 110 and a control panel 120 (e.g., a navigation terminal mounted on the vehicle or a smartphone or tablet computer owned by the occupant). Accordingly, driving information may include driving mode information and navigation information of a vehicle.

For example, a driving mode (i.e., an autonomous driving mode/manual driving mode or a sports mode/eco mode/safety mode/normal mode) of the vehicle determined by manipulation of the occupant for the driving mode switch 110 may be transmitted to the autonomous driving integrated controller 600 through the driving information input interface 101 as the driving information.

Furthermore, navigation information, such as the destination of the occupant input through the control panel 120 and a path up to the destination (e.g., the shortest path or preference path, selected by the occupant, among candidate paths up to the destination), may be transmitted to the autonomous driving integrated controller 600 through the driving information input interface 101 as the driving information.

The control panel 120 may be implemented as a touchscreen panel that provides a user interface (UI) through which the occupant inputs or modifies information for autonomous driving control of the vehicle. In this case, the driving mode switch 110 may be implemented as touch buttons on the control panel 120.

In addition, the autonomous driving integrated controller 600 may obtain traveling information indicative of a driving state of the vehicle through the traveling information input interface 201. The traveling information may include a steering angle formed when the occupant manipulates a steering wheel, an accelerator pedal stroke or brake pedal stroke formed when the occupant depresses an accelerator pedal or brake pedal, and various types of information indicative of driving states and behaviors of the vehicle, such as a vehicle speed, acceleration, a yaw, a pitch, and a roll formed in the vehicle. The traveling information may be detected by a traveling information detection unit 200, including a steering angle sensor 210, an accelerator position sensor (APS)/pedal travel sensor (PTS) 220, a vehicle speed sensor 230, an acceleration sensor 240, and a yaw/pitch/roll sensor 250, as illustrated in FIG. 1.

Furthermore, the traveling information of the vehicle may include location information of the vehicle. The location information of the vehicle may be obtained through a global positioning system (GPS) receiver 260 applied to the vehicle. Such traveling information may be transmitted to the autonomous driving integrated controller 600 through the traveling information input interface 201 and may be used to control the driving of the vehicle in the autonomous driving mode or manual driving mode of the vehicle.

The autonomous driving integrated controller 600 may transmit driving state information provided to the occupant to an output unit 300 through the occupant output interface 301 in the autonomous driving mode or manual driving mode of the vehicle. That is, the autonomous driving integrated controller 600 transmits the driving state information of the vehicle to the output unit 300 so that the occupant may check the autonomous driving state or manual driving state of the vehicle based on the driving state information output through the output unit 300. The driving state information may include various types of information indicative of driving states of the vehicle, such as a current driving mode, transmission range, and speed of the vehicle.

If it is determined that it is necessary to warn a driver in the autonomous driving mode or manual driving mode of the vehicle along with the above driving state information, the autonomous driving integrated controller 600 transmits warning information to the output unit 300 through the occupant output interface 301 so that the output unit 300 may output a warning to the driver. In order to output such driving state information and warning information acoustically and visually, the output unit 300 may include a speaker 310 and a display 320 as illustrated in FIG. 1. In this case, the display 320 may be implemented as the same device as the control panel 120 or may be implemented as an independent device separated from the control panel 120.

Furthermore, the autonomous driving integrated controller 600 may transmit control information for driving control of the vehicle to a lower control system 400, applied to the vehicle, through the vehicle control output interface 401 in the autonomous driving mode or manual driving mode of the vehicle. As illustrated in FIG. 1, the lower control system 400 for driving control of the vehicle may include an engine control system 410, a braking control system 420, and a steering control system 430. The autonomous driving integrated controller 600 may transmit engine control information, braking control information, and steering control information, as the control information, to the respective lower control systems 410, 420, and 430 through the vehicle control output interface 401. Accordingly, the engine control system 410 may control the speed and acceleration of the vehicle by increasing or decreasing fuel supplied to an engine. The braking control system 420 may control the braking of the vehicle by controlling braking power of the vehicle. The steering control system 430 may control the steering of the vehicle through a steering device (e.g., motor driven power steering (MDPS) system) applied to the vehicle.

As described above, the autonomous driving integrated controller 600 according to the present embodiment may obtain the driving information based on manipulation of the driver and the traveling information indicative of the driving state of the vehicle through the driving information input interface 101 and the traveling information input interface 201, respectively, and transmit the driving state information and the warning information, generated based on an autonomous driving algorithm, to the output unit 300 through the occupant output interface 301. In addition, the autonomous driving integrated controller 600 may transmit the control information generated based on the autonomous driving algorithm to the lower control system 400 through the vehicle control output interface 401 so that driving control of the vehicle is performed.

In order to guarantee stable autonomous driving of the vehicle, it is necessary to continuously monitor the driving state of the vehicle by accurately measuring a driving environment of the vehicle and to control driving based on the measured driving environment. To this end, as illustrated in FIG. 1, the autonomous driving apparatus according to the present embodiment may include a sensor unit 500 for detecting a nearby object of the vehicle, such as a nearby vehicle, pedestrian, road, or fixed facility (e.g., a signal light, a signpost, a traffic sign, or a construction fence).

The sensor unit 500 may include one or more of a LiDAR sensor 510, a radar sensor 520, or a camera sensor 530, in order to detect a nearby object outside the vehicle, as illustrated in FIG. 1.

The LiDAR sensor 510 may transmit a laser signal to the periphery of the vehicle and detect a nearby object outside the vehicle by receiving a signal reflected and returning from a corresponding object. The LiDAR sensor 510 may detect a nearby object located within the ranges of a preset distance, a preset vertical field of view, and a preset horizontal field of view, which are predefined depending on specifications thereof. The LiDAR sensor 510 may include a front LiDAR sensor 511, a top LiDAR sensor 512, and a rear LiDAR sensor 513 installed at the front, top, and rear of the vehicle, respectively, but the installation location of each LiDAR sensor and the number of LiDAR sensors installed are not limited to a specific embodiment. A threshold for determining the validity of a laser signal reflected and returning from a corresponding object may be previously stored in a memory (not illustrated) of the autonomous driving integrated controller 600. The autonomous driving integrated controller 600 may determine a location (including a distance to a corresponding object), speed, and moving direction of the corresponding object using a method of measuring time taken for a laser signal, transmitted through the LiDAR sensor 510, to be reflected and returning from the corresponding object.

The radar sensor 520 may radiate electromagnetic waves around the vehicle and detect a nearby object outside the vehicle by receiving a signal reflected and returning from a corresponding object. The radar sensor 520 may detect a nearby object within the ranges of a preset distance, a preset vertical field of view, and a preset horizontal field of view, which are predefined depending on specifications thereof. The radar sensor 520 may include a front radar sensor 521, a left radar sensor 522, a right radar sensor 523, and a rear radar sensor 524 installed at the front, left, right, and rear of the vehicle, respectively, but the installation location of each radar sensor and the number of radar sensors installed are not limited to a specific embodiment. The autonomous driving integrated controller 600 may determine a location (including a distance to a corresponding object), speed, and moving direction of the corresponding object using a method of analyzing power of electromagnetic waves transmitted and received through the radar sensor 520.

The camera sensor 530 may detect a nearby object outside the vehicle by photographing the periphery of the vehicle and detect a nearby object within the ranges of a preset distance, a preset vertical field of view, and a preset horizontal field of view, which are predefined depending on specifications thereof.

The camera sensor 530 may include a front camera sensor 531, a left camera sensor 532, a right camera sensor 533, and a rear camera sensor 534 installed at the front, left, right, and rear of the vehicle, respectively, but the installation location of each camera sensor and the number of camera sensors installed are not limited to a specific embodiment. The autonomous driving integrated controller 600 may determine a location (including a distance to a corresponding object), speed, and moving direction of the corresponding object by applying predefined image processing to an image captured by the camera sensor 530.

In addition, an internal camera sensor 535 for capturing the inside of the vehicle may be mounted at a predetermined location (e.g., rear view mirror) within the vehicle. The autonomous driving integrated controller 600 may monitor a behavior and state of the occupant based on an image captured by the internal camera sensor 535 and output guidance or a warning to the occupant through the output unit 300.

As illustrated in FIG. 1, the sensor unit 500 may further include an ultrasonic sensor 540 in addition to the LiDAR sensor 510, the radar sensor 520, and the camera sensor 530 and further adopt various types of sensors for detecting a nearby object of the vehicle along with the sensors.

FIG. 2 illustrates an example in which, in order to aid in understanding the present embodiment, the front LiDAR sensor 511 or the front radar sensor 521 is installed at the front of the vehicle, the rear LiDAR sensor 513 or the rear radar sensor 524 is installed at the rear of the vehicle, and the front camera sensor 531, the left camera sensor 532, the right camera sensor 533, and the rear camera sensor 534 are installed at the front, left, right, and rear of the vehicle, respectively. However, as described above, the installation location of each sensor and the number of sensors installed are not limited to a specific embodiment.

Furthermore, in order to determine a state of the occupant within the vehicle, the sensor unit 500 may further include a bio sensor for detecting bio signals (e.g., heart rate, electrocardiogram, respiration, blood pressure, body temperature, electroencephalogram, photoplethysmography (or pulse wave), and blood sugar) of the occupant. The bio sensor may include a heart rate sensor, an electrocardiogram sensor, a respiration sensor, a blood pressure sensor, a body temperature sensor, an electroencephalogram sensor, a photoplethysmography sensor, and a blood sugar sensor.

Finally, the sensor unit 500 additionally includes a microphone 550 having an internal microphone 551 and an external microphone 552 used for different purposes.

The internal microphone 551 may be used, for example, to analyze the voice of the occupant in the autonomous driving vehicle 1000 based on AI or to immediately respond to a direct voice command of the occupant.

In contrast, the external microphone 552 may be used, for example, to appropriately respond to safe driving by analyzing various sounds generated from the outside of the autonomous driving vehicle 1000 using various analysis tools such as deep learning.

For reference, the symbols illustrated in FIG. 2 may perform the same or similar functions as those illustrated in FIG. 1. FIG. 2 illustrates in more detail a relative positional relationship of each component (based on the interior of the autonomous driving vehicle 1000) as compared with FIG. 1.

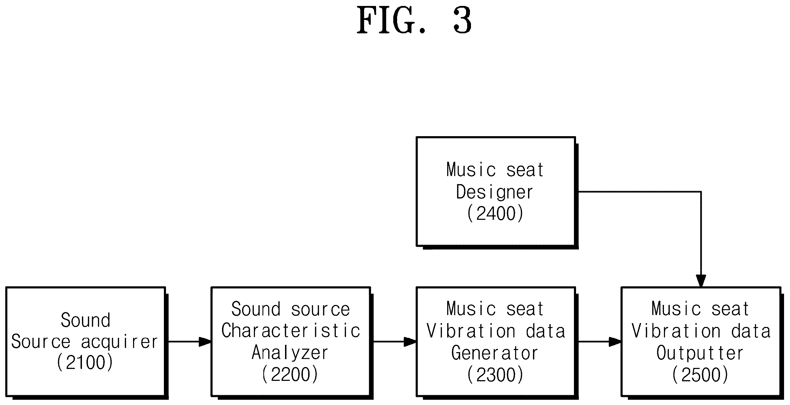

FIG. 3 is a block diagram for illustrating a vibrating seat according to embodiments of the present disclosure.

Referring to FIG. 3, a vibrating seat may include a sound source acquirer 2100, a sound source characteristic analyzer 2200, a music seat vibration data generator 2300, a music seat designer 2400, and a music seat vibration data outputter 2500.

The sound source acquirer 2100 may receive a sound source output from a vehicle. Specifically, the sound source acquirer 2100 may collect raw data of the sound source to be output from an AVN and an AMP inside the vehicle.

The sound source characteristic analyzer 2200 may analyze frequency band data of the received sound source. Specifically, the sound source characteristic analyzer 2200 may analyze the collected raw data of the sound source and classify the raw data into high-, mid-, and low-frequency band data. Specifically, the sound source characteristic analyzer 2200 may analyze a band of the sound source through frequency domain sound source spectrum analysis.

In addition, the sound source characteristic analyzer 2200 may analyze effect and articulation of the sound source.

The music seat vibration data generator 2300 may map corresponding vibrators to the frequency bands of the sound source and generate vibration data including vibration gains of the mapped vibrators.

Specifically, the vibrators may include a high-frequency vibrator that produces high-frequency vibration, a low-frequency vibrator that produces low-frequency vibration, and a mid-frequency vibrator that produces vibration in a frequency range between the high and low frequencies.

For example, the music seat vibration data generator 2300 may select and map output vibrators corresponding to the analyzed high, mid, and low frequency bands of the sound source.

The music seat vibration data generator 2300 may select and map vibrators depending on the effect of the sound source.

The music seat vibration data generator 2300 may attenuate sound source data using a low-pass filter, and reduce sensitivity of a signal to generate data for the vibration gains corresponding to implementation of vibrations.

The music seat designer 2400 may design a configuration method of the vibrating seat to implement the sense of spatiality by designing a transmission scheme for each characteristic of the sound source.

Specifically, the music seat designer 2400 may generate music seat design information based on an embedding depth of the vibrator disposed in the vibrating seat and a configuration of the media disposed between a surface of the vibrating seat and the vibrator.

In one example, the music seat designer 2400 may arrange a plurality of vibrators having different embedding depths.

In addition, the music seat designer 2400 may arrange a plurality of media having different degrees of attenuation of vibrations generated by the vibrators.

The music seat vibration data outputter 2500 may output music seat vibration data based on the music seat design information.

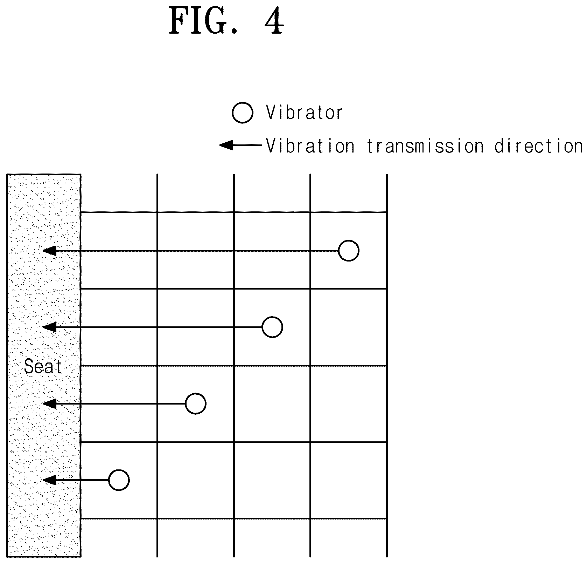

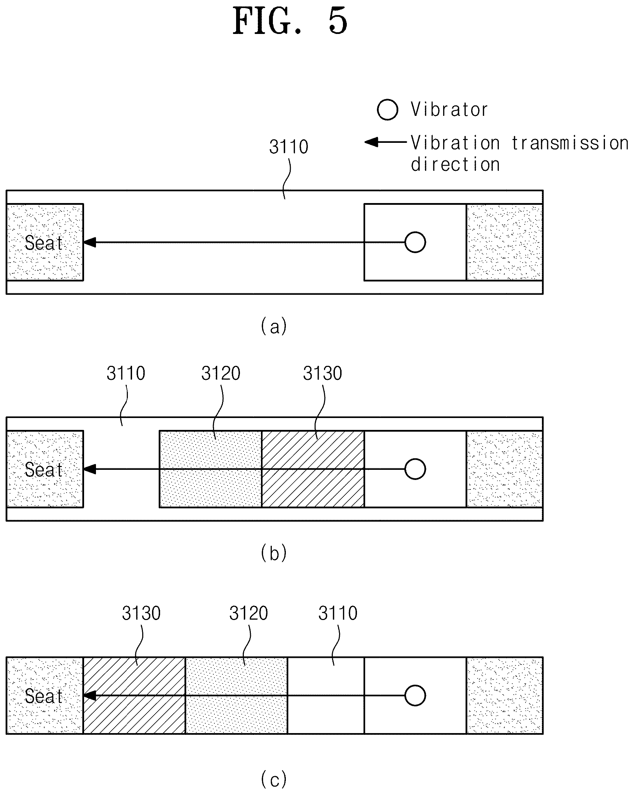

FIGS. 4 and 5 are diagrams for illustrating vibrator installation examples of a vibrating seat according to embodiments of the present disclosure.

Referring to FIG. 4, the vibrator may be embedded in the vibrating seat. The vibration characteristics of the vibrator may vary depending on a distance from the surface of the vibrating seat, that is, the embedding depth of the vibrator. In this regard, a vibration transmission direction of the vibrator may be a direction to the surface of the vibrating seat from the vibrator.

Specifically, because the high-frequency vibration is more severely attenuated and the low-frequency vibration is transmitted relatively farther, the high-, mid-, and low-frequency vibrators may be mapped and used based on the embedding depths of the vibrators. Accordingly, the sense of spatiality of the vibrating seat may be implemented.

Referring to FIG. 5, as a medium having a different characteristic is disposed between the vibrator embedded in the vibrating seat and the surface of the vibrating seat, the vibration characteristic may be changed.

Specifically, the media embedded in the vibrating seat may include a high-attenuation medium 3110 having a first attenuation coefficient, a medium-attenuation medium 3120 having a second attenuation coefficient, and a low-attenuation medium 3130 having a third attenuation coefficient. In this regard, the first attenuation coefficient is greater than the second attenuation coefficient, and the second attenuation coefficient is greater than the third attenuation coefficient.

As the low-attenuation medium 3110, a medium made of a rigid material that causes less energy loss and thus exhibits small vibration attenuation may be used. For example, the low-attenuation medium 3130 may be made of a carbon fiber or the like.

As the medium-attenuation medium 3120, a medium that irregularly disperses the vibrations and thus exhibits great attenuation, and particularly well absorbs the high-frequency vibrations may be used. For example, the medium-attenuated medium 3120 may be made of a synthetic resin or the like.

As the high-attenuation medium 3130, a medium made of a soft and flexible material that exhibits great and rapid vibration attenuation may be used. For example, the high-attenuation medium 3130 may be made of polyurethane foam, natural rubber, or the like.

In addition, the media inside the vibrating seat may be composed of liquid components such as gels having various characteristics for the respective frequency bands.

The music seat designer 2400 according to the present disclosure may arrange the high-attenuation material and the low-attenuation material alone or in a mixture in consideration of an internal material composition of the vibrating seat, thereby achieving various effects.

For example, when the vibrators of the same type are arranged at the same embedding depth, the music seat designer 2400 may change the configuration of the media to implement the sense of spatiality of the vibrating seat.

As shown in (a) in FIG. 5, only one type of the low-attenuation medium 3110 may be disposed between the vibrator in the vibrating seat and the surface of the vibrating seat. Accordingly, the vibrating seat may maintain the vibration generated through the vibrator and transmit the same to the surface of the vibrating seat.

As shown in (b) in FIG. 5, the low-attenuation medium 3110, the medium-attenuation medium 3120, and the high-attenuation medium 3130 may be sequentially arranged from the surface of the vibrating seat to the vibrator. Therefore, the vibrating seat may place the low-attenuation medium having a low density that more rapidly exhibits a vibration characteristic closer to the surface thereof and place a medium having a high density closer to a deeper portion thereof, thereby implementing both a short and sharp vibration sensation and a residual vibration sensation.

As shown in (c) in FIG. 5, the high-attenuation medium 3130, the medium-attenuation medium 3120, and the low-attenuation medium 3110 may be sequentially arranged from the surface of the vibrating seat to the vibrator. Accordingly, the vibrating seat may implement a vibration different from the vibration generated based on the configuration in (b) in FIG. 5, thereby implementing the sense of spatiality of the vibrating seat.

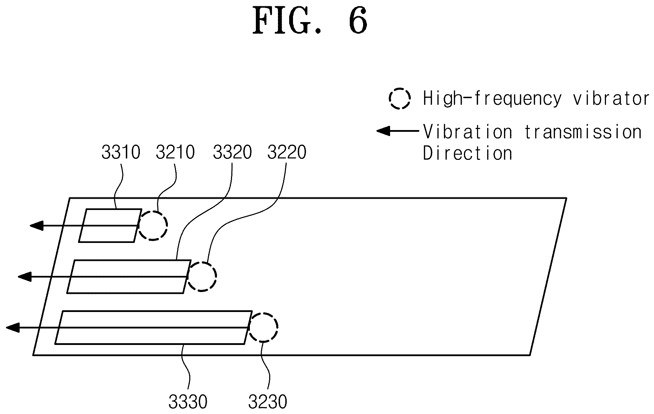

FIG. 6 is a diagram for illustrating a configuration of mapping vibrators corresponding to embedding depths of the vibrators according to an embodiment of the present disclosure.

Referring to FIG. 6, a high-frequency vibrator 3210, a mid-frequency vibrator 3220, and a low-frequency vibrator 3230 may be disposed in the vibrating seat at different embedding depths.

The high-frequency vibrator 3210 may be disposed at a first embedding depth close to the surface of the vibrating seat. That is, because the high-frequency vibrator 3210 is able to provide a characteristic of a high-frequency wave having a short wavelength, the vibration characteristic may be transmitted more rapidly as the vibrator is closer to the surface of the music seat. Together with the high-frequency vibrator 3210, the vibrating seat may place a low-attenuation medium 3310 made of a hard and lightweight material such as carbon fiber, so that the vibration may be rapidly transmitted based on the wavelength.

The mid-frequency vibrator 3220 may be disposed at a second embedding depth farther from the surface of the vibrating seat than the first embedding depth. That is, the mid-frequency vibrator 3220 may be disposed to be suitable for a characteristic of a mid-frequency wave having a medium wavelength by maintaining an appropriate distance from the surface of the vibrating seat. Together with the mid-frequency vibrator 3220, the vibrating seat may place a medium-attenuation medium 3320 made of a material having a high elastic force such as synthetic resin and silicone rubber, so that the vibration may be stably transmitted.

The low-frequency vibrator 3230 may be disposed at a third embedding depth farther from the surface of the vibrating seat than the second embedding depth. The low-frequency vibrator 3230 may be disposed to be suitable for a characteristic of a low-frequency wave having a long wavelength by maintaining a long distance from the surface of the vibrating seat. Together with the low-frequency vibrator 3230, the vibrating seat may mix and place a high-attenuation medium 3330 made of polyurethane foam, natural rubber, or the like, thereby implementing a softer sensation.

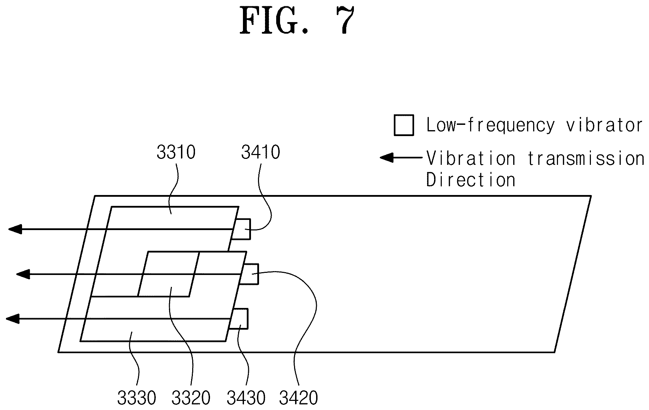

FIG. 7 is a diagram for illustrating a configuration of mapping vibrators by arranging media having different characteristics according to an embodiment of the present disclosure.

Referring to FIG. 7, multiple vibrators may be arranged at approximately the same positions in the vibrating seat, and different media 3310, 3320, and 3230 may be arranged in spaces between the surface of the vibrating seat and the respective vibrators.

Specifically, the vibrating seat may arrange first to third low-frequency vibrators 3410, 3420, and 3430 to have the same embedding depth.

In addition, in the vibrating seat, only a low-attenuation medium 3310 may be disposed in a space between the first low-frequency vibrator 3410 and the surface of the vibrating seat, the low-attenuation medium 3310, the medium-attenuation medium 3320, and the high-attenuation medium 3330 may be sequentially arranged in a space between the second low-frequency vibrator 3420 and the surface of the vibrating seat, and only the high-attenuation medium 3330 may be disposed in a space between the third low-frequency vibrator 3413 and the surface of the vibrating seat.

In this regard, when the vibrating seat operates the low-frequency vibrator, an appropriate vibrator among the first to third low-frequency vibrators 3410, 3420, and 3430 may be operated corresponding to a vibration characteristic.

For example, when the vibrating seat implements a fast vibration characteristic such as staccato, the first low-frequency vibrator may be operated.

For example, when the vibrating seat implements a slightly fast vibration characteristic such as vibrato, the second low-frequency vibrator may be operated.

For example, when the vibrating seat implements a slow vibration characteristic such as reverb, the third low-frequency vibrator may be operated.

Therefore, the music seat may combine the vibration characteristics with each other to output various vibration characteristics. In this process, the music seat may implement the effects such as the vibrato and reverb used as effect elements of music, or implement articulation (a sound length (staccato-short, legato-long), dynamics, and connection scheme (legato-continuous maintenance, portato-moderately smooth maintenance).

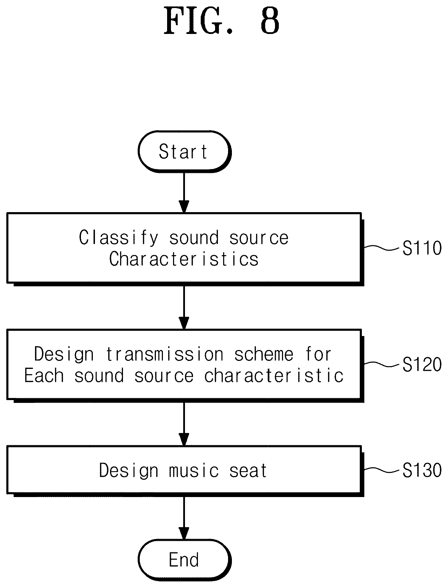

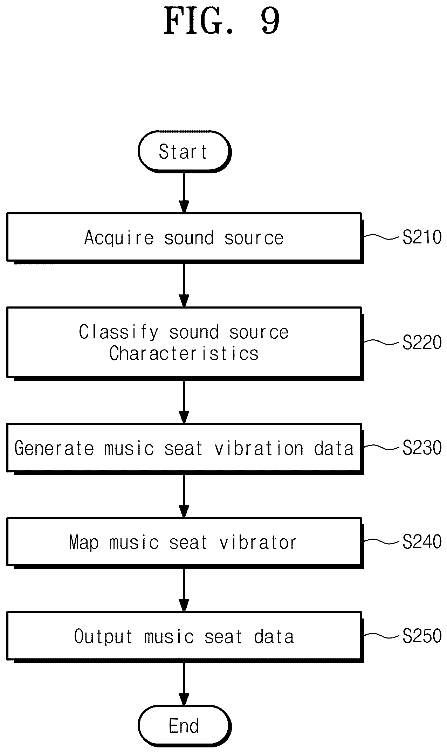

FIGS. 8 and 9 are flowcharts for illustrating a method for operating a music seat according to embodiments of the present disclosure.

Referring to FIG. 8, the vibrating seat may classify characteristics of a prestored sound source (S110), and may design a transmission scheme for each sound source characteristic (S120).

After step S120, the vibrating seat may design a music seat operation based on the designed transmission scheme for each sound source characteristic (S130).

Referring to FIG. 9, the vibrating seat may acquire a sound source in real time (S210), and may classify characteristics of the corresponding sound source (S220). The characteristics of the sound source may include frequency band data of the sound source, an effect, an articulation, and the like.

After step S220, the vibrating seat may generate music seat vibration data based on the classified characteristics of the sound source (S230).

After step S230, the vibrating seat may map the generated music seat vibration data to the vibrator in the vibrating seat (S240).

After step S240, the vibrating seat may operate the mapped vibrator to output music seat data (S250). In this regard, the music seat data may be the music seat vibration data applied to the vibrator mapped based on the sound source.

That is, the technical idea of the present disclosure may be applied to an entirety of an autonomous vehicle or may be applied to only some components inside the autonomous vehicle. The scope of the present disclosure should be determined according to the matters described in the claims.

As another aspect of the present disclosure, the above-described proposal or operation of the present disclosure may be provided with a code that may be implemented, realized, or executed by a "computer" (a comprehensive concept including a system on chip (SoC), a microprocessor, or the like), or an application, a computer-readable storage medium, a computer program product, or the like, which stores or contains the code, and this also falls within the scope of the present disclosure.

The detailed description of the preferred embodiments of the present disclosure disclosed as described above has been provided to those skilled in the art to implement and realize the present disclosure. Although it has been described above with reference to the preferred embodiments of the present disclosure, those skilled in the art will understand that the present disclosure may be variously modified and changed without departing from the scope of the present disclosure. For example, those skilled in the art may use each of the components described in the above-described embodiments in a manner of combining them with each other.

Accordingly, the present disclosure is not intended to be limited to the embodiments disclosed herein, but is to be accorded the broadest scope consistent with the principles and novel features disclosed herein.

## Claims

1. A vibrating seat comprising:
a sound source acquirer configured to receive a sound source output from a vehicle;
a sound source characteristic analyzer configured to analyze frequency band data of the received sound source;
a music seat vibration data generator configured to generate vibration data by mapping each of a plurality of vibrators disposed in the vibrating seat to respective ones of frequency bands of the sound source;
a music seat designer configured to generate music seat design information based on an embedding depth of each of the plurality of vibrators disposed in the vibrating seat and a configuration of a plurality of media disposed between a surface of the vibrating seat and each vibrator; and
a music seat vibration data outputter configured to output the music seat vibration data based on the music seat design information.

2. The vibrating seat of claim 1, wherein the plurality of vibrators include:
a high-frequency vibrator configured to produce high-frequency vibration;
a low-frequency vibrator configured to produce low-frequency vibration; and
a mid-frequency vibrator configured to produce vibration in a frequency range between high and low frequencies.

3. The vibrating seat of claim 1 or 2, wherein the plurality of media include:
a high-attenuation medium having a first attenuation coefficient;
a medium-attenuation medium having a second attenuation coefficient; and
a low-attenuation medium having a third attenuation coefficient, and
wherein the first attenuation coefficient is greater than the second attenuation coefficient, and the second attenuation coefficient is greater than the third attenuation coefficient.

4. The vibrating seat of any one of claims 1 to 3, wherein the music seat vibration data generator is configured to:
map each of the plurality of vibrators to respective ones of analyzed high-frequency band, mid-frequency band, and low-frequency band of the sound source; and
generate the vibration data including vibration gains of the mapped vibrators.

5. The vibrating seat of any one of claims 1 to 4, wherein the music seat designer is further configured to arrange the plurality of vibrators having different embedding depths.

6. The vibrating seat of any one of claims 1 to 5, wherein the music seat designer is further configured to arrange the plurality of media having different degrees of attenuation of vibration generated by the plurality of vibrators.

7. The vibrating seat of any one of claims 2 to 6, wherein the music seat designer is further configured to:
place the high-frequency vibrator at a first embedding depth spaced apart from the surface of the vibrating seat; and
place the high-attenuation medium between the high-frequency vibrator and the vibrating seat.

8. The vibrating seat of any one of claims 2 to 7, wherein the music seat designer is further configured to:
place the mid-frequency vibrator at a second embedding depth farther from the surface of the vibrating seat than the first embedding depth; and
place the medium-attenuation medium between the mid-frequency vibrator and the vibrating seat.

9. The vibrating seat of any one of claims 2 to 8, wherein the music seat designer is further configured to:
place the low-frequency vibrator at a third embedding depth farther from the surface of the vibrating seat than the second embedding depth; and
place the low-attenuation medium between the low-frequency vibrator and the vibrating seat.

10. A method for operating a music seat, the method comprising:
receiving a sound source output from a vehicle;
analyzing frequency band data of the received sound source;
generating vibration data by mapping each of a plurality of vibrators to respective ones of frequency bands of the sound source;
generating music seat design information based on an embedding depth of each vibrator disposed in the vibrating seat and a configuration of a plurality of media disposed between a surface of the vibrating seat and each vibrator; and
outputting the music seat vibration data based on the music seat design information.

11. A vibrating seat system for a vehicle, the system comprising:
a sound source acquirer configured to receive a sound source output from the vehicle;
a sound source characteristic analyzer configured to analyze frequency band data of the received sound source;
a music seat vibration data generator configured to generate vibration data by mapping each of a plurality of vibrators disposed in the vibrating seat to respective ones of frequency bands of the sound source;
a music seat designer configured to generate music seat design information based on an embedding depth of each of the plurality of vibrators disposed in the vibrating seat and a configuration of a plurality of media disposed between a surface of the vibrating seat and each vibrator;
a music seat vibration data outputter configured to output the music seat vibration data based on the music seat design information;
a camera senor;
an output device; and
a controller configured to monitor an occupant based on an image captured by the camera sensor and output a guidance to the occupant through the output device.

12. The system of claim 11, wherein the controller is further configured to turn off the music seat vibration data outputter based on the guidance.

13. The system of claim 11 or 12, wherein the plurality of vibrators include:
a high-frequency vibrator configured to produce high-frequency vibration;
a low-frequency vibrator configured to produce low-frequency vibration; and
a mid-frequency vibrator configured to produce vibration in a frequency range between high and low frequencies.

14. The system of any one of claims 11 to 13, wherein the plurality of media include:
a high-attenuation medium having a first attenuation coefficient;
a medium-attenuation medium having a second attenuation coefficient; and
a low-attenuation medium having a third attenuation coefficient, and
wherein the first attenuation coefficient is greater than the second attenuation coefficient, and the second attenuation coefficient is greater than the third attenuation coefficient.

15. The system of any one of claims 11 to 14, wherein the music seat vibration data generator is configured to:
map each of the plurality of vibrators to respective ones of analyzed high-frequency band, mid-frequency band, and low-frequency band of the sound source; and
generate the vibration data including vibration gains of the mapped vibrators.
